Europäisches Patentamt

European Patent Office

Office européen des brevets

(11) Publication number: **0 509 333 A2**

# EUROPEAN PATENT APPLICATION

(21) Application number: **92105705.5**

(22) Date of filing: **02.04.92**

(51) Int. Cl.5: **G06F  15/62**

(30) Priority: **19.04.91 US 688785**

(43) Date of publication of application:
**21.10.92 Bulletin  92/43**

(84) Designated Contracting States:
**DE FR GB IT**

(71) Applicant: **International Business Machines Corporation**
**Old Orchard Road**
**Armonk, N.Y. 10504(US)**

(72) Inventor: **Thomas, Paul G.**
**3424 Beret Lane**
**Silver Spring, MD 20906(US)**

(74) Representative: **Schäfer, Wolfgang, Dipl.-Ing.**
**European Patent Attorney, IBM Deutschland GmbH, Schönaicher Strasse 220**
**W-7030 Böblingen(DE)**

(54) **A data processing system and method for handling interchangeable image objects for documents having a plurality of sizes.**

(57) A data processing system and method handles interchangeable image objects for documents having diverse sizes and formats. This enables storing, printing and displaying images of documents having a variety of sizes on different types of equipment in the same system. Compressed A and B size document images are stored in a first type image file which is Mixed Object Document Content Architecture format (MO:DCA-P), having a field for the size of the document image. C to E size document images are each divided into component tile images which are each compressed and stored in a second type image file which has a format interchangeable with the format of the first image file, but includes map data relating the tile images to the document image. A preview image can be included in the image file, which can be immediately displayed or printed while the tile images are being decompressed. The second image file is in a second type Mixed Object Document Content Architecture format (MO:DCA-X), which has the same overall format as the MO:DCA-P format. The preview image is concealed in a NoOP field and is used typically by those I/O devices in the system which are capable of handling C to E size documents. This enables the two types of image files to be commingled in a common system storage, permitting the interchangeability of the image objects for documents of diverse size.

FIG. 1

The invention disclosed broadly relates to data processing methods and apparatus and more particularly relates to handling interchangeable image objects for documents having a plurality of sizes.

Documents can be optically scanned and their images digitized and stored in a data processing system. An example of a system for storing and manipulating digitized images of documents is provided in the copending patent application by C. A. Parks, et al. entitled "Dual Density Digital Image System," serial number 211,646, filed June 27, 1988, assigned to the IBM Corporation and incorporated herein by reference. Another copending patent application is by C. A. Parks, et al. entitled "Object Management and Delivery System Having Multiple Object Resolution Capability," serial number 211,722, filed June 27, 1988, assigned to the IBM Corporation and incorporated herein by reference. These two patent applications describe an example digital image archiving system within which the invention described herein finds application.

The digitized images of documents are compressed and stored in image files referred to as image objects. An example of a data architecture which enables the interchange of information including images, text and graphics is the Mixed Object Document Content Architecture - Presentation (MO:DCA-P). The MO:DCA-P architecture is described, for example in the publication "Mixed Object Document Content Architecture Reference," SC31-6802, IBM Corporation; available through IBM branch offices. The MO:DCA-P environment is used to describe documents that are interchanged among data processing systems. Each document consists of one or more pages with each page of the document containing an image, presentation text, graphics data or a combination of the three. Within a MO:DCA-P envelope, images can be represented by an image architecture such as image object content architecture (IOCA). The purpose of IOCA is to provide a standard method by which image applications and products can represent images. IOCA is described for example in the publication "Image Object Content Architecture Reference," SC31-6805, IBM Corporation; available through IBM branch offices. IOCA is also described in the publication "Architectures for Object Interchange," GG24-3296, IBM Corporation; available through IBM branch offices.

All image applications scan, store, retrieve, display, print or exchange images within or across image applications. These activities can be generalized as creating, exchanging, storing, retrieving, and outputting images. In creating an image, a scanner or a video camera forms a digitized image of the document. The digitized image can then be pre-processed to remove device dependent information from the image. As a result, a digitized image is generated which has the characteristics of resolution and size, which do not depend on the method by which the image was captured. Next, an image processing step is performed on the digitized image which can include actions such as storing the image, retrieving the image, distributing the image, modifying the image, and using the image in an application. Then post-processing steps can be applied in the support of output devices. This will require the addition of device control information such as printing control characters. Finally, the post-processed image can be output to a printer, display or other type of output device.

It is the step of processing the image which is performed on device independent images, which are free of all application and device unique features, which is where the IOCA architecture is employed. The base structure for the image is an image segment and the IOCA structure serves to represent images in the image segment. The structure of the image segment consists of image data parameters and image data. The image data parameters include the image dimension and resolution, the recording sequence, the compression technique, the number of bits per pixel, the pixel structure, and any look-up table information. IOCA is implemented as function sets. For example, Function Set 10 (FS10) enables the interchange of bi-level images. The two compression algorithms supported by this function set are the IBM modified CCITT Modified Read Algorithm and the CCITT T.6 Group 4 Facsimile Coding Scheme. These two compression algorithms are described in the article by K. L. Anderson, et al. entitled "Binary Image Manipulation Algorithms in the Image View Facility," IBM Journal of Research and Development, 931, No. 1, pp. 16-31 (January 1987), and the publication "CCITT Recommendation T.6," CCITT T Series, Vol. 7, Part 7.3, International Telecommunication Union, Geneva (1985), respectively.

Another IOCA function set will be described herein as IOCA Function Set 00 (FS00). IOCA FS00 is a tiling representation for an image, wherein the image is divided into component tile images which are separately compressed and whose position with respect to the original document image, is recorded by map data.

In summary, the Mixed Object Document Content Architecture - Presentation (MO:DCA-P) is a carrier data stream that consists of objects and the layout information that specifies how a document is to be printed or displayed. Objects may be in line as part of the document, or they may reside in an external library. Objects that can be carried in MO:DCA-P include text, image, graphics and fonts. Image Object Content Architecture (IOCA) is the data stream for images, the purpose of which is to put the image data into a format that can be understood by another program. Things such as type of image, width, length, resolution, compression type, and such are carried in the data stream. Then an image becomes self-contained so that other programs can interpret the image without referencing a separate data base. MO:DCA-P is used to describe where on a page an image is to be placed. The MO:DCA-P format is used as an envelope to surround the IOCA description of the image.

A problem which has not been solved by existing document architectures is how to provide interchangeable image objects for documents having diverse sizes and formats, so as to enable a mixture of objects for different document sizes to be commingled in a common system storage, even though some output devices in the system are not capable of outputting all document sizes.

It is an object of the invention to provide interchangeable image objects for documents having a plurality of sizes.

It is another object of the invention to provide interchangeable image objects for documents having diverse sizes and formats.

It is another object of the invention to provide interchangeable image objects for documents having diverse sizes and formats, to enable the storing, printing and displaying of images of documents having a variety of sizes on different types of equipment in the same system.

It is an object of the invention to provide interchangeable image objects for documents having a plurality of sizes, which is compatible with prior document image archiving systems limited to A or B size pages.

It is an object of the invention to provide interchangeable image objects for documents having a plurality of sizes, to enable a mixture of objects for different document sizes to be commingled in a common system storage, even though some output devices in the system are not capable of outputting all document sizes.

It is an object of the invention to provide interchangeable image objects for documents having a plurality of formats, to enable a mixture of objects for different document formats to be commingled in a common system storage, even though some output devices in the system are not capable of outputting all document formats.

It is still another object of the invention to provide interchangeable image objects for documents having a plurality of formats, where at least some of the formats include a preview image derived from the source document image.

It is still a further object of the invention to provide interchangeable image objects for documents having a plurality of formats, using alternate forms of mixed object document content architecture formats.

These and other objects, features and advantages are accomplished by the invention disclosed herein. A data processing system and method are disclosed for handling interchangeable image objects for documents having diverse sizes and formats. These objects are raster images which are exchanged between systems limited to document image archiving and systems archiving both document images and large format drawing images. This enables storing, printing and displaying images of documents having a variety of sizes on different types of equipment in the same system. For example engineering drawings have several standard sizes, from the A size which is a rectangle of 8.5 by 11 inches to the E size which is a rectangle of 34 by 44 inches. This creates a problem as to how documents having such a variety of sizes can be stored, printed and displayed after they have been scanned into a digital image storage system. This problem is solved by the invention in the following manner.

A document scanner having a size data input means, scans in documents of a first size associated with a first size datum, such as A size. The document scanner can also scan in documents of a second size larger than the first size associated with a second size datum, such as the E size. The scanner will generate a first digitized image of the first document and will generate a second digitized image of the second document.

A first workstation processor coupled to the scanner, receives the first digitized document image and in response to the first size datum associated therewith, compresses the first digitized image into a first compressed document image. The first processor then forms a first image file having a format including a first header representing the first size datum and the first compressed document image. The first image file is in a first type Mixed Object Document Content Architecture - Presentation format (MO:DCA-P), which envelops a first type of Image Object Content Architecture format (IOCA function set 10) for the compressed digitized document image of the first size document. The MO:DCA-P format includes a field for the size of the document image.

The first processor, or optionally an alternate processor, receives the second digitized document image and in response to the second size datum associated therewith, partitions the second digitized document image into several component tile images. The number of tile images composing a document image can be selected for convenience. If the size of a tile were selected to be a two inch square, then an E size document would be composed of 374 such tiles.

For the purpose of illustration here, the number of tiles into which the second document image is partitioned is selected as two, referred to here as the first and second tile images. The first data processor generates map data identifying the positional relationship between the second digitized document image and the first and second tile images. Then, the first data processor compresses the first tile image into a first compressed tile image and compresses the second tile image into a second compressed tile image. Then, in accordance with the invention, the first data processor forms a second image file having a format interchangeable with the format of the first image file including a second header representing the second size datum, the map data, the first compressed tile image and the second compressed tile image. In accordance with the invention, the second image file is in a second type Mixed Object Document Content Architecture format referred to herein as MO:DCA-X, which has the same overall format as the MO:DCA-P format, thus insuring the interchangeability of the of the first size document and second size document image objects.

The MO:DCA-X format, in accordance with the invention, includes a preview image which is a smaller scale bit map representation of the second document image. This preview image is inserted into the MO:DCA header, preceded by a NoOp command. The preview image will be displayed at a workstation such as a viewing workstation or a printer workstation, prior to the assembly of the tile images into the second digitized document image. This enables the user to confirm the contents of the full sized second digitized document image prior to its assembly and it also allows a medium upon which the user may direct a pointing device such as a mouse, to indicate portions of the full sized second digitized document image to be displayed or printed. The use of the NoOp command enables the preview image to be concealed within the MO:DCA format so that image output devices which are not programmed to use the preview image, will ignore the field which it occupies.

The MO:DCA-X format for the second image file, in accordance with the invention, envelops a second type of Image Object Content Architecture format (referred to herein as IOCA Function Set 00) for the plurality of compressed tile images which compose the image of the second size document. A field of the IOCA Function Set 00 format is used to contain the map data identifying the positional relationship between the second digitized document image and the plurality of tile images. Then, in accordance with the invention, the MO:DCA-X envelope containing the IOCA Function Set 00 image segment is used by equipment which is capable of printing or displaying a larger range of A through E size documents.

Further in accordance with the invention, if the user operating a workstation running a printer which can print only A and B size documents, inadvertently elects to access a second type image file for C through E size documents, in accordance with the invention the workstation converts the large document image to A size for printing or display. The image file is read into the workstation as usual and when it extracts the second size datum, the workstation assembles the second type digitized image by decompressing the component tiles from the second type image file using the map data therein, and then in accordance with the invention, the workstation rescales the large image into a smaller A or B size image which is then output for printing of display from the workstation. In this manner, a mixture of document sizes, some of which are incompatible with a printer or a display, can be commingled in the common system storage, and yet the printer or display is enabled to handle all images, the larger ones being scaled down.

The compression of some tile images can be selectively omitted by the data processor when those tile images are blank, and the second image file can further include tile type information describing a state of compression for each tile.

The map data in the second image file can include the number of tiles in the horizontal direction and the number of tiles in the vertical direction forming the rectangular arrangement for the second digitized document image, and the map data can further include information on the pattern for ordering the tiles in the rectangular arrangement and the tile type information.

The system includes a storage means, such as a large capacity DASD or an optical storage which is coupled to the workstation processor, for storing the first and second image files, interchangeably.

The system includes a second workstation processor coupled to the storage means, for receiving the first and the second image files to prepare them for printing or display.

A printer is coupled to the second data processor, for printing the first and the second image files. A display is also coupled to the second data processor or alternately to a third data processor, for displaying the first and the second image files.

The second processor receives the first image file, extracts the first size datum from the first header and in response to the first size datum, decompresses the first compressed image generating the first digitized image. The second processor outputs the first digitized image to the printer for printing or to the display for viewing.

When the second processor, or optionally an alternate processor, receives the second image file, it extracts the second size datum from the second header and in response to the second size datum, decompresses the first compressed tile image generating the first tile image and decompresses the second compressed tile image generating the second tile image. Then the second processor extracts the map data from the second image file and generates the second digitized document image by arranging the first tile image and the second tile image in the positional relationship defined by the map data. The second processor then outputs the second digitized document image to the printer for printing or to the display for viewing. Optionally, the steps of extracting, decompressing and assembling could be performed by several processors coupled together in the system.

In this manner, interchangeable image objects for documents having diverse sizes and formats enable storing, printing and displaying the document images with different types of equipment in the same system.

These and other objects, features and advantages of the invention will be more fully appreciated with reference to the accompanying figures.

Fig. 1    is an overall system architectural diagram of the invention.

Fig. 2    is a more detailed diagram of the host storage 46 of the system in Fig. 1.

Fig. 3    is a flow diagram of the instruction steps for the program 100 which runs on the scanner workstation 26 of the system of Fig. 1.

Fig. 4    is a flow diagram of the instruction steps for the program 140 which runs on the viewing workstation 42 of the system of Fig. 1.

Fig. 5    is a flow diagram of the instruction steps for the program 180 which runs on the A to E size printer workstation 32 of the system of Fig. 1.

Fig. 6A    illustrates an example process of image compression of an A size document image 70 to its compressed image form 70'.

Fig. 6B    illustrates the general format of a first type image file 48 for the A size document image of Fig. 6A.

Fig. 7A    illustrates a C size document image 80 and its component image tiles C1,1 to C9,7.

Fig. 7B    illustrates an example process of image compression of an an image tile C1,2 from the C size document image 80 of Fig. 7A, to its compressed image form C1,2'.

Fig. 7C    illustrates the map data 224 for the component image tiles of the document image 80 of Fig. 7A.

Fig. 7D    illustrates the tile type data 226 for the component image tiles of the document image 80 of Fig. 7A.

Fig. 7E    illustrates the general format of a second type image file 54 for the C size document image of Fig. 7A.

Fig. 8A    illustrates the MO:DCA-P format for the image file 48 for the A size document image of Fig. 6A.

Fig. 8B    illustrates the MO:DCA-X format for the image file 54 for the C size document image of Fig. 7A.

Fig. 8C    illustrates the IOCA Function Set 10 image segment 95 which is enveloped by the MO:DCA-P image file 48 of Fig. 8A.

Fig. 8D    illustrates the IOCA Function Set 00 image segment 97 which is enveloped by the MO:DCA-X image file 54 of Fig. 8B.

Fig. 9    is a more detailed architectural diagram of the scanner workstation 26, in the system of Fig. 1.

Fig. 10    is a more detailed architectural diagram of the viewing workstation 42, in the system of Fig. 1.

Fig. 11    is a more detailed architectural diagram of the A to E size printer workstation 32, in the system of Fig. 1.

Fig. 12    is a more detailed architectural diagram of the A & B size printer workstation 28, in the system of Fig. 1.

Fig. 13    is a more detailed diagram of the memory 460 of the A & B size printer workstation 28 of Fig. 12, when its operator has accessed a second type image file 54 for a C size document image.

Fig. 14    is flow diagram of the instruction steps for the program 500 which runs on the A & B size printer workstation 28 of the system of Fig. 1.

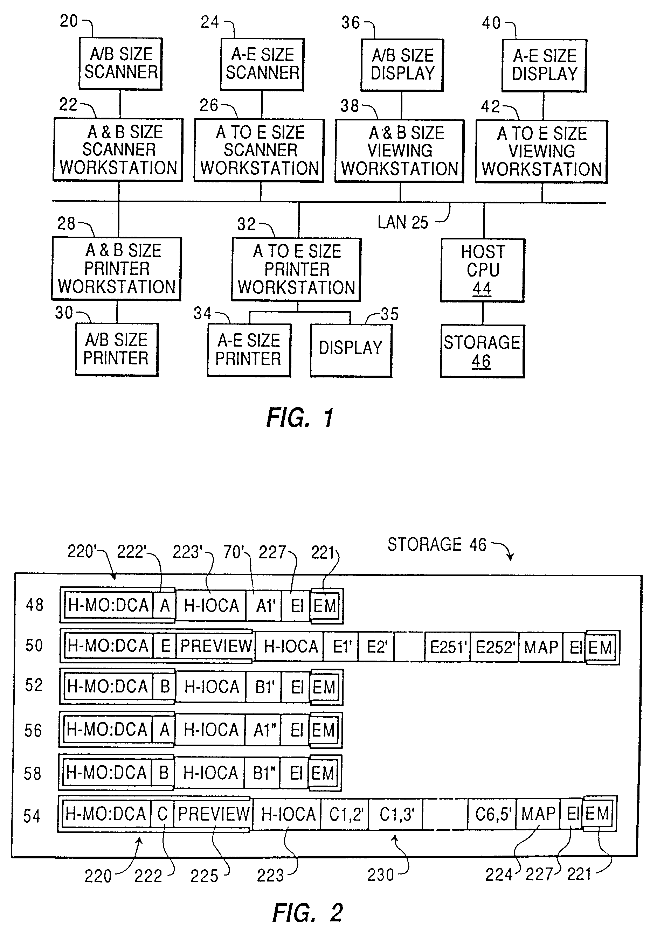

Fig. 1 is an overall system architectural diagram of the invention. Fig. 1 shows a local area network LAN 25 which interconnects scanner workstations, viewing workstations and printer workstations with a host CPU and a common storage. The A and B size scanner 20 is capable of scanning in A and B size engineering documents, A size being 8-1/2 by 11 inches and B size being 11 by 17 inches. Also, A+ or legal size documents can be scanned in which are 8-1/2 by 14 inches. The A and B size scanner 20 is connected to the A and B size scanner workstation 22, which in turn is connected to the LAN 25. The A and B size scanner 20 is limited to inputting A size through B size documents.

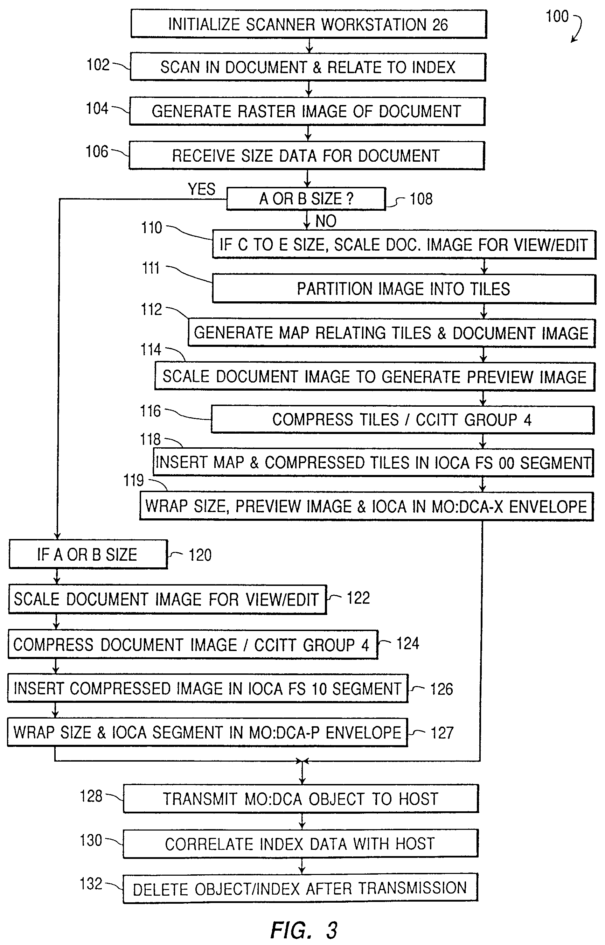

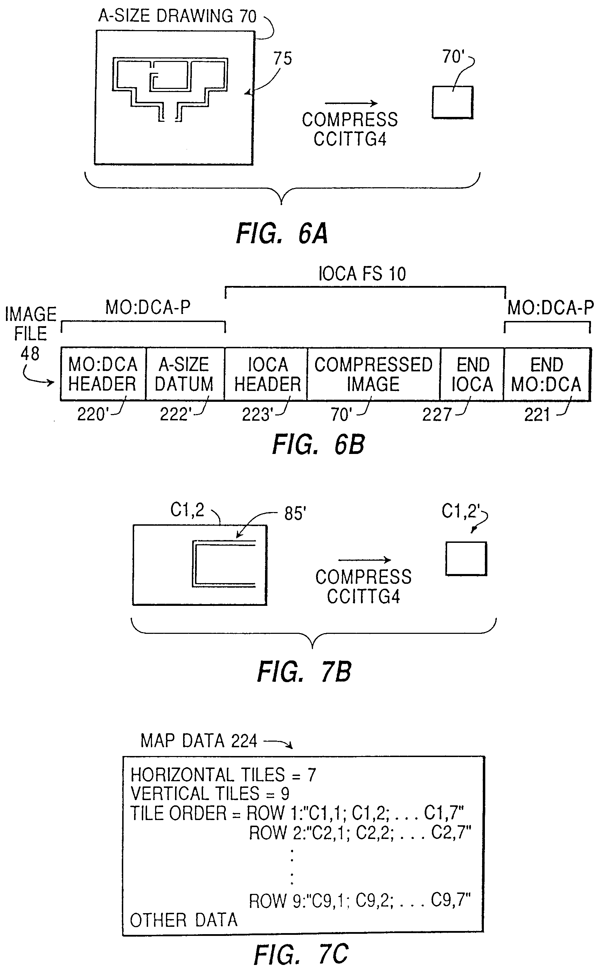

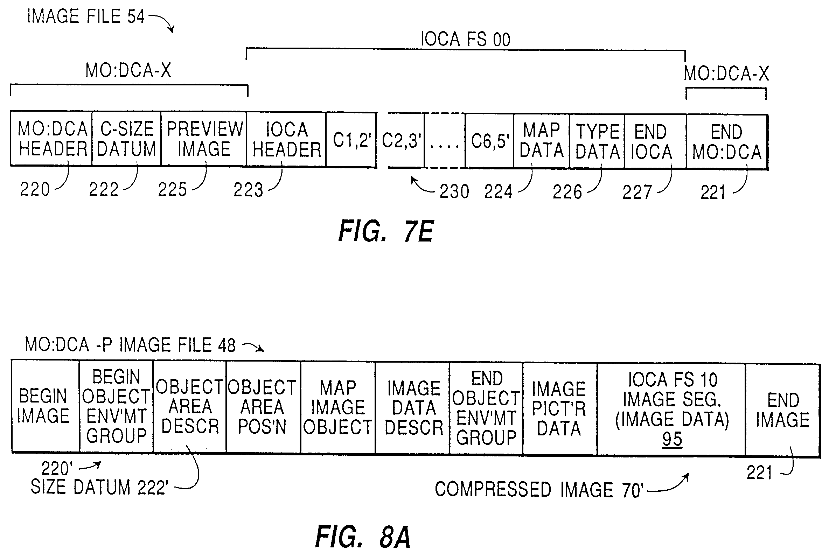

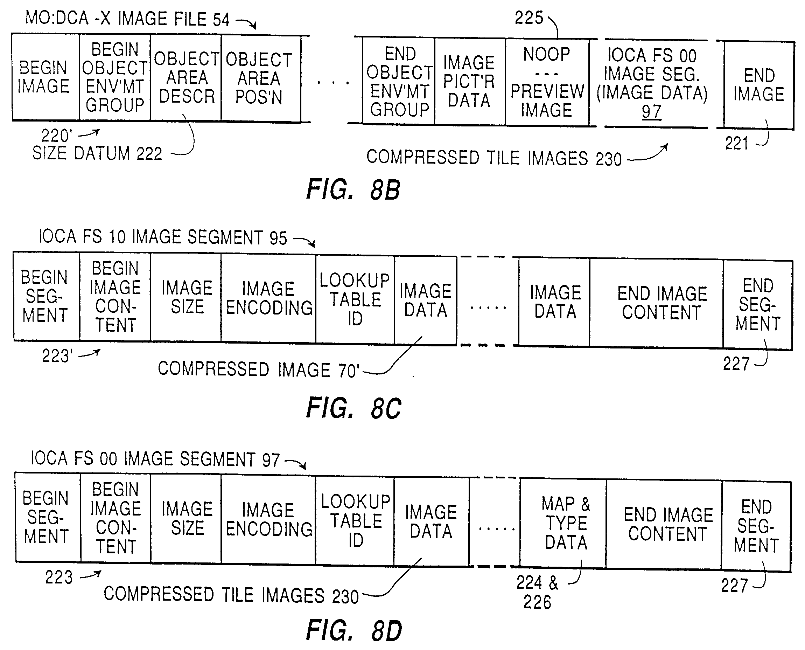

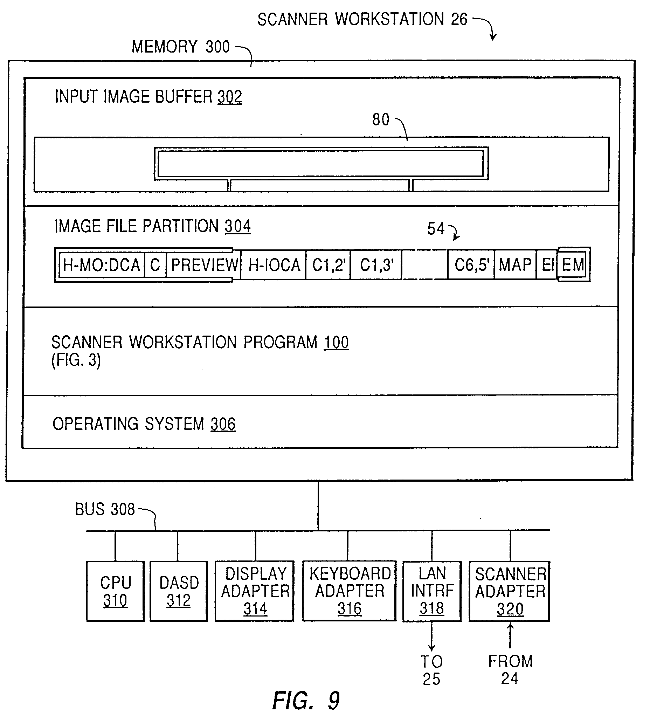

The A through E size scanner 24 is capable of inputting document sizes from A size all the way through to E size which is a rectangle 34 inches by 44 inches. The A-E size scanner 24 is connected through the A to E size scanner workstation 26 to the LAN 25. Fig. 9 is a more detailed architectural diagram of the A to E size scanner workstation 26. Fig. 3 is a flow diagram of the instruction steps for the program 100 which runs on the scanner workstation 26. The A-E document scanner 24 outputs the digitized image of documents over the scanner adapter 320 in accordance with step 102 of Fig. 3. An index is maintained on the host 44 to locate the image file for a document after it has been scanned into the system. Step 102 includes relating the image of the document with the index. The CPU 310 of Fig. 9 executes the program instruction steps of Fig. 3 to generate the raster image of the document which is stored in the input image buffer 302 of the memory 300 in Fig. 9. The size data 222 for the document is output by the scanner 24, either by automatic detection of the physical size of the document, or by a keyboard entry input by the operator at the workstation. Step 106 receives the size data 222 and step 108 of Fig. 3 determines whether the document size 222 is A or B size or alternately another size. If the document is A or B size, then the flow diagram of Fig. 3 goes to step 120 and then to step 122 where the document is scaled and it can be displayed for viewing on a display at the workstation, for example over the display adapter 314. Then, step 124 compresses the document image, for example the A size document 70 shown in Fig. 6A which is compressed using the CCITT group 4 compression algorithm to form the compressed image 70'. Then in step 126, the compressed document image 70' is placed in an IOCA FS10 image segment and in step 127 the IOCA segment is wrapped in a MO:DCA-P envelop as is shown in Fig. 6B, which will be loaded in the partition 304 of memory 300 in Fig. 9. Fig. 8A shows a more detailed illustration of the MO:DCA-P image file 48 with header 220' and end 221 segments defining the MO:DCA-P portion and Fig. 8C shows the IOCA FS10 image segment with header 223' and 227 segments defining the IOCA portion, for the A size drawing 70 of Fig. 6A. There it is seen that the size datum 222' is stored in the object area descriptor of the MO:DCA-P envelope and the compressed image 70' is stored in the IOCA image segment. Then in step 128 of Fig. 3, the MO:DCA-P object 48 is transmitted through the LAN interface 318 to the LAN 25 and then to the host computer 44 of Fig. 1 where it can be stored in the common system storage 46 which is shown in greater detail in Fig. 2. As can be seen in Fig. 2, the image file 48 is loaded into the storage 46 and is commingled along with other image files representing a diversity of document sizes. In step 130 of Fig. 3, index data to locate and access the image file 48 is correlated with the host 44. Thereafter, in step 132, the object and the index information can be deleted from the scanner workstation 26 after transmission to the host 44.

The digitized image in the image buffer 302 and the image file in the partition 304 of the memory 300 of Fig. 9 can also be temporarily stored on the DASD 312 communicated from the memory over the bus 308 in Fig. 9. The operator can make entries on a keyboard and through the keyboard adapter 316, can display all or a portion of the digitized image of the document on the display connected through the display adapter 314. The operating system 306 in the memory 300 of Fig. 9 supports the scanner workstation program 100 running on the scanner workstation 26.

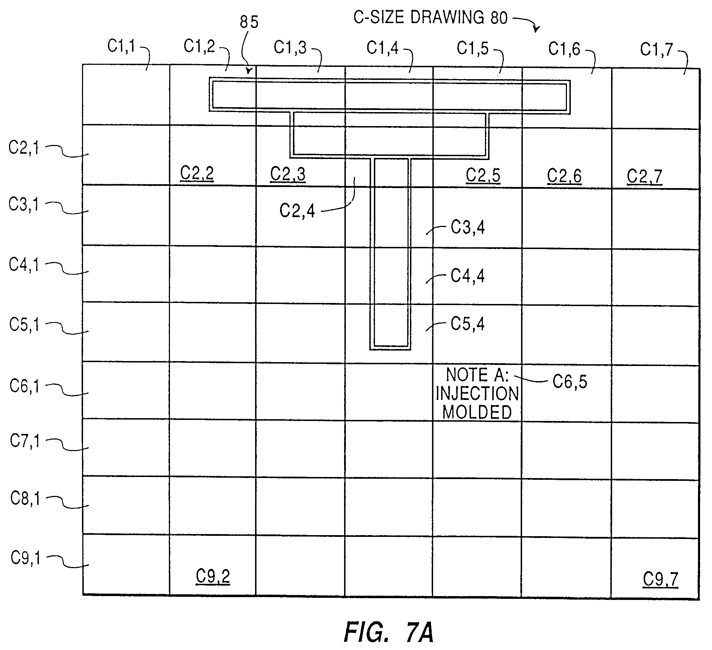

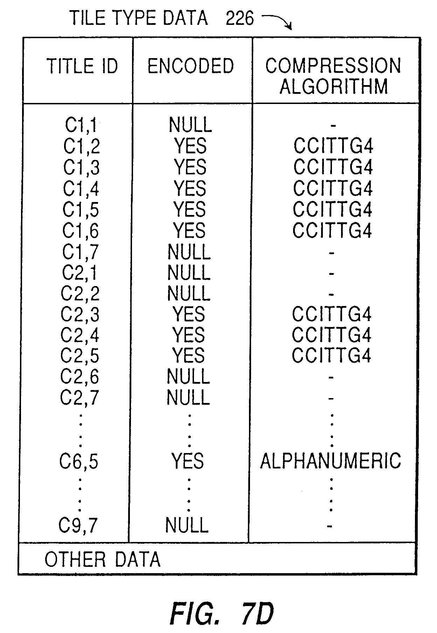

Since the scanner 24 can accommodate documents having a size up to E size, a larger document such as the C size document 80 shown in Fig. 7A can be input to the scanner 24. The size data 222 is determined in step 108 of Fig. 3 to be not A or B size, but from C through E size. Then in step 110 the document is scaled for display at the workstation 26. Then in step 111, the C size document image 80 is partitioned into tiles as is shown in Fig. 7A. The C size document 80 can be conveniently divided into 63 rectangular component tiles, seven in the horizontal direction and nine in the vertical direction. The tiles can be designated in standard matrix notation as in the upper left-hand corner C1,1 and following the upper row from left to right as C1,1, C1,2, C1,3...C1,7. The second row of tiles can be designated from left to right C2,1; C2,2; C2,3;...C2,7 and so on until the bottom row of tiles in Fig. 7A can be designated from left to right C9,1;...C9,7. Map data 224 can be generated as shown in Fig. 7C, which identifies the positional relationship between the digitized document image 80 and the component tile images C1,1, through C9,7. This is shown in step 112 of Fig. 3. Then in step 114, the document image can be scaled to generate a preview image. A preview image is a bit mapped image which is small enough to be stored in the display buffer for the display associated with the workstation. Typically this will correspond to an A size document image. The preview image can be compressed or alternately it can be maintained in its bit mapped state. Then, in step 116, the tiles are reviewed to identify which tiles contain the graphic 85 depicted on the C size drawing 80, and which component tiles are empty of graphic information. A tile type data 226 is compiled in Fig. 7D which characterizes the tile type for each of the 63 tiles in the C size document 80. For example, the tile C1,1 is empty of graphic information and therefore it is encoded as a null and will not be compressed. Its location however will be remembered in the map data 224. The tile C1,2 does contain a portion 85' of the graphic 85 and therefore the tile type data 226 will record the tile C1,2 as being encoded and will identify the type of compression algorithm to be employed for compressing the tile image C1,2. Then in step 116, the tiles are compressed using the CCITT Group 4 compression algorithm, and this operation is depicted in Fig. 7B for the tile C1,2, whose digitized image is compressed into the compressed tile C1,2'. The compression algorithm transforms the portion 85' of the graphic 85 into a data representation which occupies less memory as represented in the compressed tile image of C1,2'. This operation is sequentially performed for all of the tiles in the C size document 80 of Fig. 7A, mapping, generating a tile type, and selectively compressing each respective tile until all 63 component tiles have been processed in step 116. Then in step 118, the map data 224, the tile type data 226 and the compressed files 230 are inserted into the IOCA Function Set 00 segment. Then in step 119, the size data 222, the preview image 225 and the IOCA Function Set 00 segment are wrapped in the MO:DCA-X envelope, so as to form the image file 54 shown in Fig. 7E. The image file 54 is then loaded into the image file partition 304 of the memory 300 of the scanner workstation 26 of Fig. 9. Fig. 8B shows a more detailed illustration of the MO:DCA-X image file 54 with header 220 and end 221 segments defining the MO:DCA-X portion and Fig. 8D shows the IOCA FS00 image segment with header 223 and end 227 segments defining the IOCA portion. It can be seen that the size datum 222 is represented in the object area descriptor for the MO:DCA-X envelope and the compressed tile images 230 are stored in the IOCA segment image data. It is to be noted that the NoOp command accompanies the preview image 225 in the MO:DCA-X envelope in Fig. 8B. Then, step 128 of Fig. 3 transmits the MO:DCA object 54 through the SAN interface 318, over the LAN 25 to the host 44 for storage in the common system storage 46. Fig. 2 shows the image file 54 in the storage 46, commingled with a diverse combination of other image files. Then step 130 of Fig. 3 will correlate index information with the host 44 followed by step 132 which deletes the object and index information after their transmission to the host 44.

The tile type data 226 of Fig. 7D shows that the compression of some tile images can be selectively omitted by the scanner workstation 26 when those tile images such as C1,1, are blank, and the resulting image file 54 will include information describing the state of compression for each tile in the tile type data 226. The map data 224 in Fig. 7C can include the number of tiles in the horizontal direction and the number of tile in the vertical direction forming the rectangular arrangement for the digitized document image 80. The map data 224 includes information on the pattern for ordering the tiles in the rectangular arrangement, in the form of the tile order which specifies for each row, the location of each respective tile in the row, for all rows in the document image 80. Other data can also be included in the map data 224, as desired.

It should be noted that a variety of compression algorithms can be applied to the tiles in the document 80, as is shown in the tile type data 226 of Fig. 7D. In particular, the tile C6,5 is an alphanumeric text contained within the graphic information in the document 80. An alternate type of compression algorithm can be selected for compressing various types of graphic information, such as alphanumeric text, so that each respective tile image can have its own individual form of compression algorithm applied, depending upon the type of graphic information.

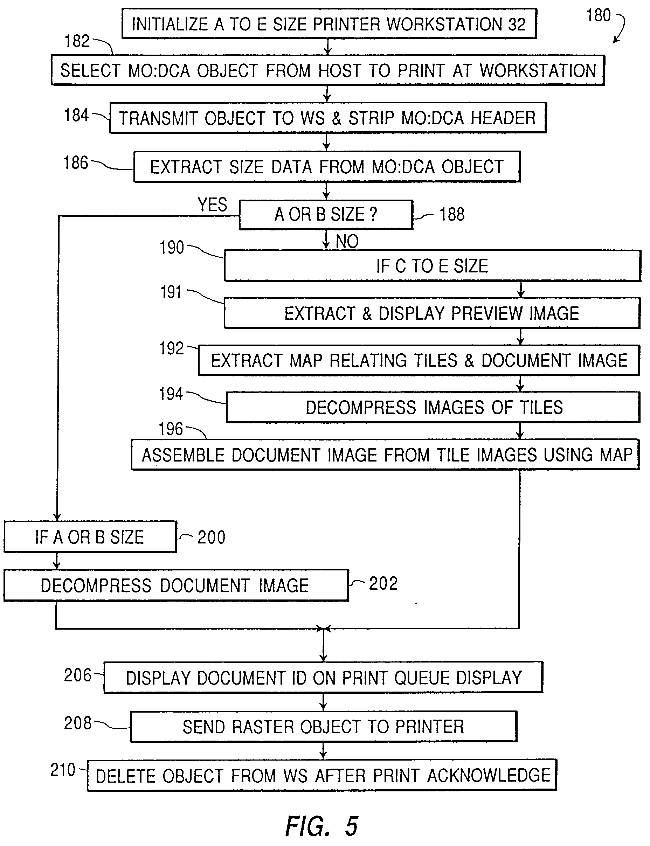

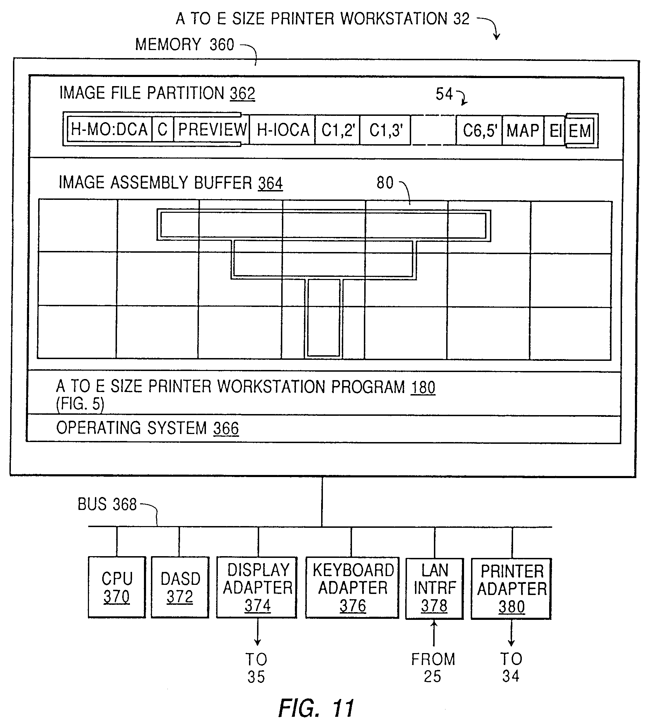

The system of Fig. 1 includes two types of printers, the A and B size printer 30 which is connected through the A and B size printer workstation 28 to the LAN 25 and second the A through E size printer 34 which is connected through the A to E size printer workstation 32 to the LAN 25. The A to E size printer workstation 32 also has an optional display 35 connected to it. Fig. 5 is a flow diagram of the instruction steps for the program 180 which runs on the A to E size printer workstation 32. Fig. 11 is a more detailed architectural diagram of the A to E size printer workstation 32. The memory 360 in the workstation 32 includes the A to E size printer workstation program 180. The first step 182 in Fig. 5 of the program allows the operator at the workstation to select which MO:DCA object to access from the common system storage 46 through the host 44, for printing on the A to E size printer 34 or for viewing on the display 35. If an A size drawing such as 70 in Fig. 6A is selected, its image file 48 is transmitted from the storage 46 over the local area network 25 and through the LAN interface 378 and over the bus 368 in the workstation 32 to be loaded in the image file partition 362. There, in step 184 of Fig. 5, the MO:DCA header is stripped and in step 186 the size data is extracted from the MO:DCA object. If the size data 222' indicates an A or B size document in step 188, then the flow diagram passes to step 200 and then to step 202 where the image file 48 has its compressed image 70' of Fig. 6A decompressed in step 202 forming the document image 70. The document image is to be printed on the A to E size printer 34. The document image is loaded into the image assembly buffer 364 and then output through the printer adapter 380 to the printer 34. The document ID on the print queue may be displayed by outputting that information over the display adapter 374 to the display 35. The document image can be printed on the printer 34 in step 208. Thereafter, in step 210, the object is deleted after a print acknowledge is received from the printer 34.

Alternately, if step 188 of Fig. 5 determines that the size data 222 extracted from the MO:DCA object is a C through E size, then step 190 passes to step 191 to extract and display the preview image 225. The preview image is extracted from the MO:DCA-X image file 54 shown in Fig. 8B as a bit mapped image corresponding to an A size document which can be immediately displayed or printed, thereby allowing the user to quickly judge the content of the image represented by the image file 54. The flow diagram then proceeds to step 192 where the map data 224 is extracted from the image file 54 of Fig. 8B relating the compressed images of the tiles 230 to their position in the document image 80. Then in step 194, the tile type data 226 is extracted as shown in Fig. 7D, and each compressed tile image is decompressed in accordance with the compression algorithm information available in the tile type data 226. Each tile image is decompressed by a reversal of the process shown in Fig. 7B, in step 194. Those tiles which are blank are reconstituted as blank tile spaces for the document image 80 and the document image 80 is assembled in the image assembly buffer 364 of the memory 360 shown in Fig. 11. After the assembly step 196, the document image is then output over the printer adapter 380 in step 208 and the document ID can be optionally displayed in step 206 on the print queue display 35. Thereafter, step 210 will delete the object after a print acknowledgement is received from the printer 34.

The CPU 370 in Fig. 11 executes the program steps in Fig. 5, enabling the operator at the workstation to select the desired image file from the storage 46 for printing at the printer 34 or for display at the display 35. The document images and their image files can be temporarily stored on the DASD 372. The operator can operate a keyboard connected through the keyboard adapter 376, to specify those image files desired to be accessed. The host CPU 44 can download a batch of image files 48 and/or 54 to the DASD 372 at the workstation 32.

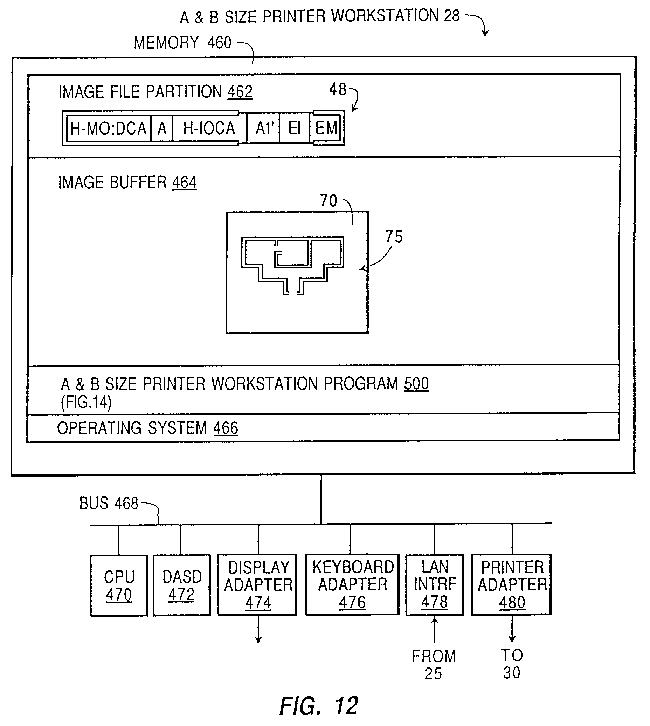

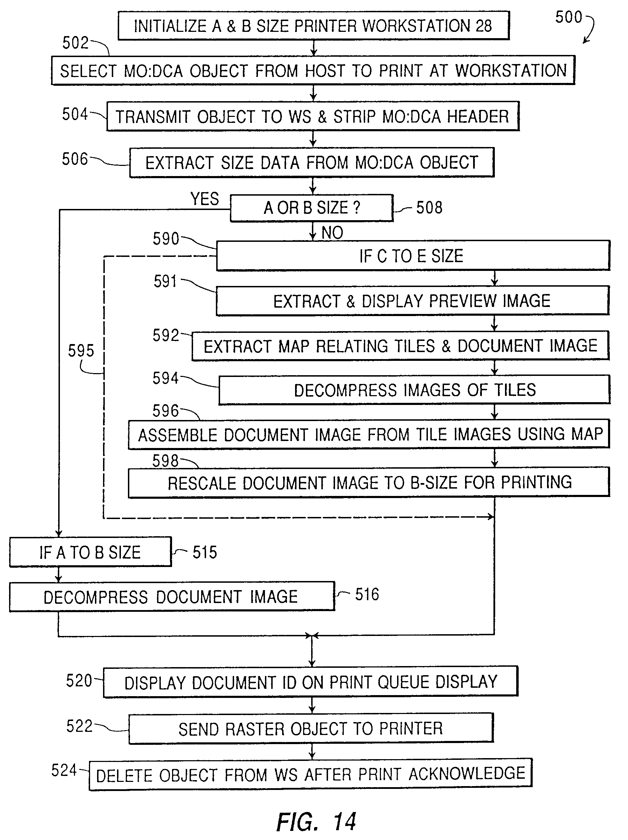

A second type printer, limited to only A size through B size documents, is the A and B size printer 30 in the system of Fig. 1. Printer 30 is connected through the A and B size printer workstation 28 to the LAN 25. The A and B size printer workstation 28 is shown in greater detail in the architectural diagram of Fig. 12. Fig. 14 is a flow diagram of the instruction steps for the program 500 which runs on the A and B size printer workstation 28. In step 502 of the program 500 of Fig. 14, the operator at the workstation 28 will select which MO:DCA object is desired from the host 44 for printing at the printer 30. Since the A and B size printer 30 is limited so that it cannot print documents larger than B size, normally the operator at the workstation 28 will access only document images which the printer 30 is capable of printing. However, on occasion, the operator at the workstation 28 will inadvertently attempt to print a document image which is larger than B size on the printer 30. Program 500 provides for this circumstance. The MO:DCA object 48 or 54 will be transmitted over the LAN 25 to the workstation 28, through the LAN interface 478. The image file will be loaded into the image file partition 462 of the memory 460. Step 502 selects the MO:DCA object. Then step 504 transmits the object to the workstation and strips header and then step 506 extracts the size data 222 or 222' from the MO:DCA object. In step 508, if the size data is A to B size, then the flow diagram passes to step 515 which goes to step 516 for decompressing the document image. The image file 48 of Fig. 8A has its compressed image 70' of Fig. 6A decompress into the image 70 and loaded into the image buffer 464 of the memory 460. There it can be seen that the graphic 75 depicted in the A size document image 70 is loaded in the buffer 464. Then, the document image can be output over the printer adapter 480 to the printer 30. The document ID can be displayed on a print queue display in step 520 as the document is output for printing in step 522. The object can then be deleted after a print acknowledge is received from the printer 30, in step 524.

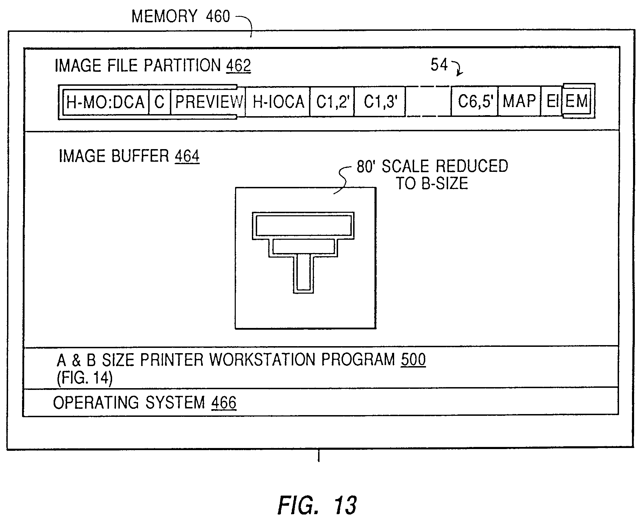

Alternately, if step 508 determines that the size data extracted from the MO:DCA object indicates the document is larger than A to B size, then an image file 54 has been received by the workstation 28. Referring to Fig. 13 which shows the memory 460 at workstation 28, the image file 54 is loaded into the image file partition 462 and if step 590 of Fig. 14 determines that it is C to E size, then in step 591 the preview image 225 is extracted and displayed or printed at the workstation. In a first embodiment the preview image 225 itself may be then sent as the raster object to the printer, from step 591 over path 595 to step 520 and the printer output step 522. Alternately, the flow diagram can proceed to step 592 where the map data is extracted relating the tiles to the document image. Then in step 594, the tiles can be decompressed and in step 596 the document image can be assembled from the tile images using the map data. Then in step 598, the document image can be rescaled to B size for printing or for display. The rescaled B size image can be sent as the raster object to the printer in step 522. Whether the preview image displayed in the step 591 is used as the raster object sent to the printer or alternately whether the rescaled document image in step 598 is sent as the raster object to the printer, the operation of the program 500 in Fig. 14 enables the A-B size printer to provide a graphical output for the user, notwithstanding the large scale of the original document represented by the image file 54. In another embodiment, the preview image extracted in step 591 can be printed as a cover sheet for the printed page of the rescaled document image output from step 598. In this manner, a mixture of document sizes, some of which are not compatible with the printer, can be commingled in the common system storage, and yet the printer is enabled to print all document images.

Fig. 13 illustrates the memory 460 of the A and B size printer workstation 28, when its operator has inadvertently accessed the second type image file 54 for a C size document image. It can be seen that the image buffer 464 contains the image 80' which is the scaled down version of the C size image 80, reduced to B size.

The CPU 470 in the workstation 28 of Fig. 12 executes the instructions in the flow diagram of Fig. 14. Image files and digitized images of documents can be temporarily stored on the DASD 472. They can also be viewed on a display connected through the display adapter 474. The operator can input his selections and commands through the keyboard adapter 476. The operating system 466 supports the operation of the A and B size printer workstation program 500 in workstation 28.

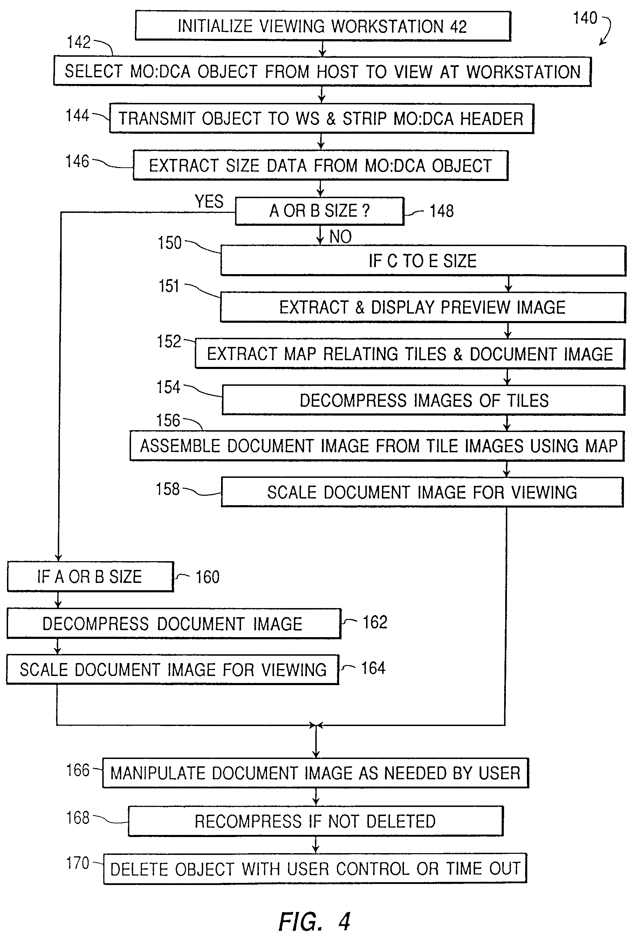

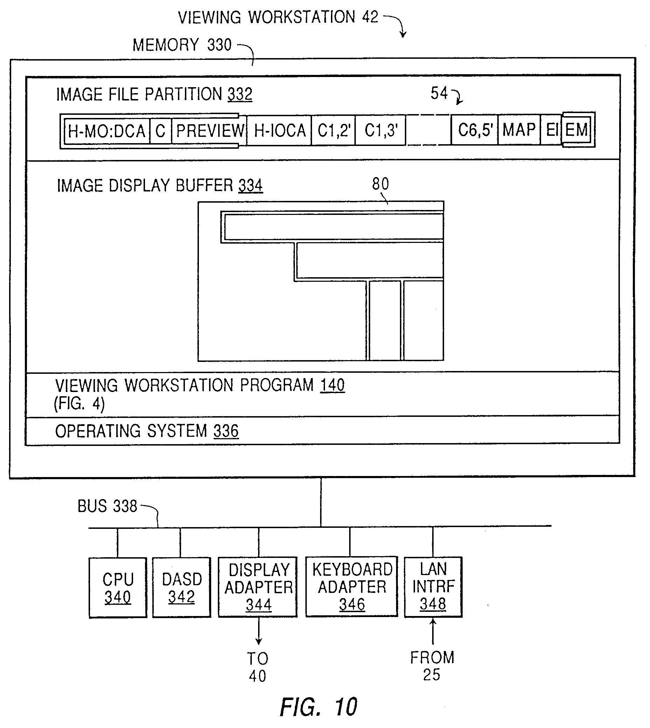

The system of Fig. 1 also shows two types of displays, the A and B size display 36 is limited so that it can only show document images which are no larger than B size. It is connected through the A and B size viewing workstation 38 to the LAN 25. Also in the system of Fig. 1, the A through E size display 40 is capable of displaying all document sizes from the A size up through the E size. It is connected through the A to E size viewing workstation 42 to the LAN 25. Fig. 10 is a more detailed architectural diagram of the viewing workstation 42 in the system of Fig. 1. Fig. 4 is a flow diagram of the instruction steps for the program 140 which runs on the viewing workstation 42. The operation of the viewing workstation 42 is similar in principle to that previously described for the A to E size printer workstation 32. In Fig. 4, the program 140 runs on the viewing workstation 42, and takes the selection from the user operating the workstation 42 to access a MO:DCA object from the host 44 for viewing the document image at the A to E size display 40. Step 144 transmits the object to the workstation and strips the MO:DCA header and step 146 extracts the size data from the MO:DCA object. Step 148 determines if the size is A or B size and if it is, the flow diagram proceeds to step 160 which proceeds to step 162 to decompress the document image. The image file 48 for an A size document, is shown in Fig. 8A. The compressed image 70' in Fig. 6A is decompressed into the A size document image 70. Then in step 164, the document image is scaled for viewing on the display 40. The image file partition 332 in memory 330 of the viewing workstation 42, is loaded with the image file 48. After decompression, the document image is stored in the image display buffer 334 before being output over the display adapter 344 to the display 40. Then in step 166, the user may manipulate the document image as needed, viewing it on the display 40. After the user has finished with the document image, it may be recompressed in step 168 if it is not to be deleted. Alternately, in step 170, the object can be deleted by user command or after a timeout interval. The CPU 340 communicates over the bus 338 to the memory 330 to execute the program instructions in Fig. 4. The document image and the image file can be temporarily stored on the DASD 342. The user can input his commands and selections through the keyboard adapter 346.

Alternately, if the size data 222 is determined by step 148 in Fig. 4 to be from C through E size, then the image file 54, which is shown in Fig. 8B, represents a large image such as the C sized document shown in Fig. 7A. The flow diagram flows to step 150 and then to step 151 where the preview image 225 is extracted from the image file 54 and immediately displayed on the display 40. In step 152, the map data 224 is extracted from the image file 54, which relates the tiles 330 to the document image 80. Then in step 154, the tile type data 226 is extracted from the image file 54, as shown in Fig. 7D and then each respective compressed tile image is decompressed in step 154, in a reversal of the process shown in Fig. 7B. The image file 54 is in the image file partition 332 of the memory 330 and the decompression operation on the component tiles in Fig. 7A results in step 156 which assembles the document image 80 from the tile images using the map data 224. The document image 80 is assembled in the image display buffer 334 of the memory 330. In step 158, the document image can be scaled for viewing and is output over the display adapter 344 to the display 40 for viewing. The operator may manipulate the document image as needed in step 166. The image may be recompressed if it is not deleted, in step 168. Then alternately the document image may be deleted by user command or by a timeout interval, in step 170. The operating system 336 supports the viewing workstation program 140 in the memory 330. The CPU 340 communicates over the bus 338 to the memory 330, executing the program instructions in the flow diagram of Fig. 4.

Reference to Fig. 2 shows that a mixture of document sizes, some of which are incompatible with certain output devices, can be commingled in the common system storage 46, and yet the output devices can be selectively permitted to print or output all images, generating documents of a size for which the output device was designed. The storage 46 is shown in Fig. 2, storing an A size image file 48, an E size image file 50, a B size image file 52, a C size image file 54, another A size image file 56 and another B size image file 58. In accordance with the invention, the printing of the image files 50 and 54 rescaled to A size on a printer such as the A and B size printer 30 and the display of such large documents would be rescaled to B size on limited displays such as the A and B size display 36. Therefore, even though a user inadvertently elects to access an image file for a document too large to print or display at his workstation, the erroneous selection will be automatically rescaled without interrupting the normal operations of the system.

The resulting invention provides interchangeable image objects for documents having diverse sizes and formats, so as to enable the storing, printing and displaying of images of documents having a variety of sizes on different types of equipment in the same system.

Further advantageous embodiments of the invention have the following features:

A data processing system for manipulating images of documents having at least two different sizes and interchangeable image objects, comprising:

a first document scanner means having a size data input means, for scanning in documents of a first size associated with a first size datum generating a first digitized image of said first document;

a second document scanner means having a size data input means, for scanning in documents of a second size larger than said first size associated with a second size datum and generating a second digitized image of said second document;

a first data processor means coupled to said first scanner means, for receiving said first digitized image and in response to said first datum associated therewith, compressing said first digitized image into a first compressed image, said first data processor means forming a first image file having a format including a first header representing said first datum and said first compressed image file;

a second data processor means coupled to said second scanner means, for receiving said second digitized image and in response to said second datum associated therewith, partitioning said second digitized image into first and second tile images, said second data processor means generating map data identifying a positional elationship between said second digitized image and said first and second tile images, said second data processor means compressing said first tile image into a first compressed tile image and compressing said second tile image into a second compressed tile image, said second data processor means forming a second image file having a format interchangeable with said format of said first image file including a second header representing said second datum, said map data, said first compressed tile image and said second compressed tile image; and

storage means coupled to said first data processor means and to said second data processor means, for storing said first and second image files.

A data processing system for printing images of documents having at least two different sizes and interchangeable image objects, comprising:

a storage means for storing first and second image files;

said first image file having a format including a first header representing a first document size datum and a first compressed document image file corresponding to a first digitized document image;

said second image file having a format interchangeable with said format of said first image file including a second header representing a second document size datum, a first compressed tile image corresponding to a first digitized tile image and a second compressed tile image corresponding to a second digitized tile image, and map data identifying a positional relationship between a second digitized document image and said first and second digitized tile images;

a data processor means coupled to said storage means, for receiving said first and said second image files to prepare them for printing; and

a printer means coupled to said data processor means, for printing said first and said second image files;

said data processor means receiving said first image file, extracting said first datum from said first header and in response to said first datum, decompressing said first compressed image generating said first digitized image, said data processor means outputting said first digitized image to said printer means;

said data processor means receiving said second image file, extracting said second datum from said second header and in response to said second datum, decompressing said first compressed tile image generating said first tile image and decompressing said second compressed tile image generating said second tile image, said data processor means extracting said map data from said second image file and generating said second digitized image by arranging said first tile image and said second tile image in said positional relationship therewith in response to said map data, said data processor means outputting said second digitized image to said printer means.

Said last mentioned system may further comprise:

a second data processor means coupled to said storage means, for receiving said first and said second image files to prepare said first image file for printing in a first document size; and

a second printer means coupled to said second data processor means, for printing documents in said first document size;

said second data processor means receiving said first image file, extracting said first datum from said first header and in response to said first datum, decompressing said first compressed image generating said first digitized image, said second data processor means outputting said first digitized image to said second printer means;

said second data processor means receiving said second image file representing a second document having a second document size larger than said first document size;

said second data processor extracting said second datum from said second header and in response to said second datum, decompressing said first compressed tile image generating said first tile image and decompressing said second compressed tile image generating said second tile image, said data processor means extracting said map data from said second image file and generating said second digitized image by arranging said first tile image and said second tile image in said positional relationship therewith in response to said map data;

said second data processor rescaling said second digitized image to said first document size;

said data processor means outputting said second digitized image to said printer means for printing in said first document size.

A data processing system for displaying images of documents having at least two different sizes and interchangeable image objects, comprising:

storage means for storing first and second image files;

said first image file having a format including a first header representing a first document size datum and a first compressed document image file corresponding to a first digitized document image;

said second image file having a format interchangeable with said format of said first image file including a second header representing a second document size datum, a first compressed tile image corresponding to a first digitized tile image and a second compressed tile image corresponding to a second digitized tile image, and map data identifying a positional relationship between a second digitized document image and said first and second digitized tile images;

a data processor means coupled to said storage means, for receiving said first and said second image files to prepare them for display; and

a display coupled to said data processor means, for displaying said first and said second image files;

said data processor means receiving said first image file, extracting said first datum from said first header and in response to said first datum, decompressing said first compressed image generating said first digitized image, said data processor means outputting said first digitized image to said display;

said data processor means receiving said second image file, extracting said second datum from said second header and in response to said second datum, decompressing said first compressed tile image generating said first tile image and decompressing said second compressed tile image generating said second tile image, said data processor means extracting said map data from said second image file and generating said second digitized image by arranging said first tile image and said second tile image in said positional relationship therewith in response to said map data, said data processor means outputting said second digitized image to said display.

Said last mentioned system may further comprise:

a second data processor means coupled to said storage means, for receiving said first and said second image files to prepare said first image file for display in a first document size; and

a second display coupled to said second data processor means, for displaying said first image file in said first document size;

said second data processor means receiving said first image file, extracting said first datum from said first header and in response to said first datum, decompressing said first compressed image generating said first digitized image, said second data processor means outputting said first digitized image to said second display;

said second data processor means receiving said second image file representing a second document having a second document size larger than said first document size;

said second data processor extracting said second datum from said second header and in response to said second datum, decompressing said first compressed tile image generating said first tile image and decompressing said second compressed tile image generating said second tile image, said data processor means extracting said map data from said second image file and generating said second digitized image by arranging said first tile image and said second tile image in said positional relationship therewith in response to said map data;
said second data processor rescaling said second digitized image to said first document size;
said data processor means outputting said second digitized image to said second display for displaying in said first document size.

A data processing system for printing images of documents having at least two different sizes and interchangeable image objects, comprising:
a document scanner means having a size data input means, for scanning in documents of a first size associated with a first size datum and scanning in documents of a second size larger than said first size associated with a second size datum, said scanner means generating a first digitized image of said first document and generating a second digitized image of said second document;
a first data processor means coupled to said scanner means, for receiving said first digitized image and in response to said first datum associated therewith, compressing said first digitized image into a first compressed image, said first processor means forming a first image file having a format including a first header representing said first datum and said first compressed image file;
said first data processor means receiving said second digitized image and in response to said second datum associated therewith, partitioning said second digitized image into first and second tile images, said first data processor means generating map data identifying a positional relationship between said second digitized image and said first and second tile images, said first data processor means compressing said first tile image into a first compressed tile image and compressing said second tile image into a second compressed tile image, said first data processor means forming a second image file having a format interchangeable with said format of said first image file including a second header representing said second datum, said map data, said first compressed tile image and said second compressed tile image;
storage means coupled to said first data processor means, for storing said first and second image files;
a second data processor means coupled to said storage means, for receiving said first and said second image files to prepare them for printing; and
a printer means coupled to said second data processor means, for printing said first and said second image files;
said second processor means receiving said first image file, extracting said first datum from said first header and in response to said first datum, decompressing said first compressed image generating said first digitized image, said second processor means outputting said first digitized image to said printer means;
said second processor means receiving said second image file, extracting said second datum from said second header and in response to said second datum, decompressing said first compressed tile image generating said first tile image and decompressing said second compressed tile image generating said second tile image, said second processor means extracting said map data from said second image file and generating said second digitized image by arranging said first tile image and said second tile image in said positional relationship therewith in response to said map data, said second processor means outputting said second digitized image to said printer means.

A data processing system for displaying images of documents having at least two different sizes and interchangeable image objects, comprising:
a document scanner means having a size data input means, for scanning in documents of a first size associated with a first size datum and scanning in documents of a second size larger than said first size associated with a second size datum, said scanner means generating a first digitized image of said first document and generating a second digitized image of said second document;
a first data processor means coupled to said scanner means, for receiving said first digitized image and in response to said first datum associated therewith, compressing said first digitized image into a first compressed image, said first processor means forming a first image file having a format including a first header representing said first datum and said first compressed image file;
said first data processor means receiving said second digitized image and in response to said second datum associated therewith, partitioning said second digitized image into first and second tile images, said first data processor means generating map data identifying a positional relationship between said second digitized image and said first and second tile images, said first data processor means compressing said first tile image into a first compressed tile image and compressing said second tile image into a second compressed tile image, said first data processor means forming a second image file having a format interchangeable with said format of said first image file including a second header representing said second datum, said map data, said first compressed tile image and said second compressed tile image;
storage means coupled to said first data processor means, for storing said first and second image files;
a second data processor means coupled to said storage means, for receiving said first and said second image files to prepare them for display; and

a display coupled to said second data processor means, for displaying said first and said second image files;

said second processor means receiving said first image file, extracting said first datum from said first header and in response to said first datum, decompressing said first compressed image generating said first digitized image, said second processor means outputting said first digitized image to said display;

said second processor means receiving said second image file, extracting said second datum from said second header and in response to said second datum, decompressing said first compressed tile image generating said first tile image and decompressing said second compressed tile image generating said second tile image, said second processor means extracting said map data from said second image file and generating said second digitized image by arranging said first tile image and said second tile image in said positional relationship therewith in response to said map data, said second processor means outputting said second digitized image to said display.

In a data processing system, a method for printing images of documents having at least two different sizes and interchangeable image objects, comprising the steps of:

accessing with a processor means, a first image file having a format including a first header representing a first document size datum and a first compressed document image file corresponding to a first digitized document image;

accessing with said processor means, a second image file having a format interchangeable with said format of said first image file, including a second header representing a second document size datum, a first compressed tile image corresponding to a first digitized tile image and a second compressed tile image corresponding to a second digitized tile image, and map data identifying a positional relationship between a second digitized document image and said first and second digitized tile images;

extracting said first datum from said first header with said processor means and in response to said first datum, decompressing said first compressed document image generating said first digitized document image;

outputting said first digitized document image to a printer means;

extracting said second datum from said second header with said processor means and in response to said second datum, decompressing said first compressed tile image generating said first digitized tile image and decompressing said second compressed tile image generating said second digitized tile image;

extracting said map data from said second image file with said processor means and generating said second digitized document image by arranging said first digitized tile image and said second digitized tile image in said positional relationship in response to said map data; and

outputting said second digitized document image to said printer means.

In a data processing system, a method for displaying images of documents having at least two different sizes and interchangeable image objects, comprising the steps of:

accessing with a processor means, a first image file having a format including a first header representing a first document size datum and a first compressed document image file corresponding to a first digitized document image;

accessing with said processor means, a second image file having a format interchangeable with said format of said first image file, including a second header representing a second document size datum, a first compressed tile image corresponding to a first digitized tile image and a second compressed tile image corresponding to a second digitized tile image, and map data identifying a positional relationship between a second digitized document image and said first and second digitized tile images;

extracting said first datum from said first header with said processor means and in response to said first datum, decompressing said first compressed document image generating said first digitized document image;

outputting said first digitized document image to a display;

extracting said second datum from said second header with said processor means and in response to said second datum, decompressing said first compressed tile image generating said first digitized tile image and decompressing said second compressed tile image generating said second digitized tile image;

extracting said map data from said second image file with said processor means and generating said second digitized document image by arranging said first digitized tile image and said second digitized tile image in said positional relationship in response to said map data; and

outputting said second digitized document image to said display.

In a data processing system, a method for printing images of documents having at least two different sizes and interchangeable image objects, comprising the steps of:

accessing with a processor means, a first image file having a format including a first header representing a first document size datum and a first compressed document image file corresponding to a first digitized document image;

accessing with said processor means, a second image file having a format interchangeable with said format of said first image file, including a second header representing a second document size datum, a first compressed tile image corresponding to a first digitized tile image and a second compressed tile image corresponding to a second digitized tile image, and map data identifying a positional relationship between a second digitized document image and said first and second digitized tile images;

extracting said first datum from said first header with said processor means and in response to said first datum, decompressing said first compressed document image generating said first digitized document image;

outputting said first digitized document image to a printer means;

extracting said second datum from said second header with said processor means;

extracting said map data from said second image file with said processor means in response to said second datum;

decompressing said first compressed tile image generating said first digitized tile image and decompressing said second compressed tile image generating said second digitized tile image, in response to said second datum;

generating said second digitized document image by arranging said first digitized tile image and said second digitized tile image in said positional relationship in response to said map data; and

outputting said second digitized document image to said printer means.

In a data processing system, a method for displaying images of documents having at least two different sizes and interchangeable image objects, comprising the steps of:

accessing with a processor means, a first image file having a format including a first header representing a first document size datum and a first compressed document image file corresponding to a first digitized document image;

accessing with said processor means, a second image file having a format interchangeable with said format of said first image file, including a second header representing a second document size datum, a first compressed tile image corresponding to a first digitized tile image and a second compressed tile image corresponding to a second digitized tile image, and map data identifying a positional relationship between a second digitized document image and said first and second digitized tile images;

extracting said first datum from said first header with said processor means and in response to said first datum, decompressing said first compressed document image generating said first digitized document image;

outputting said first digitized document image to a display;

extracting said second datum from said second header with said processor means;

extracting said map data from said second image file with said processor means in response to said second datum;

decompressing said first compressed tile image generating said first digitized tile image and decompressing said second compressed tile image generating said second digitized tile image, in response to said second datum;

generating said second digitized document image by arranging said first digitized tile image and said second digitized tile image in said positional relationship in response to said map data; and

outputting said second digitized document image to said display.

In a data processing system, a method for selectively printing images of documents of a first size, from a plurality of images of documents having at least two different sizes and interchangeable image objects, comprising the steps of:

accessing with a processor means, a first image file having a format including a first header representing a first document size datum and a first compressed document image file corresponding to a first digitized document image of a document having a first document size;

accessing with said processor means, a second image file having a format interchangeable with said format of said first image file, including a second header representing a second document size datum, a first compressed tile image corresponding to a first digitized tile image and a second compressed tile image corresponding to a second digitized tile image, and map data identifying a positional relationship between a second digitized document image and said first and second digitized tile images, said second digitized document image representing a second document having a second document size larger than said first document size;

extracting said first datum from said first header with said processor means and in response to said first datum, decompressing said first compressed document image generating said first digitized document image;

outputting said first digitized document image to a printer means;

extracting said second datum from said second header with said processor means;

extracting said map data from said second image file with said processor means in response to said second datum;

decompressing said first compressed tile image generating said first digitized tile image and decompressing said second compressed tile image generating said second digitized tile image, in response to said second datum;

generating said second digitized document image by arranging said first digitized tile image and said second digitized tile image in said positional relationship in response to said map data;

rescaling said second digitized image to said first document size;

outputting said second digitized image to said printer means for printing in said first document size.

A data processing system for manipulating images of documents having at least two different sizes and interchangeable image objects, comprising:

a document scanner means having a size data input means, for scanning in documents of a first size associated with a first size datum and scanning in documents of a second size larger than said first size associated with a second size datum, said scanner means generating a first digitized image of said first document and generating a second digitized image of said second document;

a data processor means coupled to said scanner means, for receiving said first digitized image and in response to said first datum associated therewith, compressing said first digitized image into a first compressed image, said data processor means forming a first image file having a format including a first header representing said first datum and said first compressed image file;

said data processor means receiving said second digitized image and in response to said second datum associated therewith, partitioning said second digitized image into first and second tile images, said data processor means generating map data identifying a positional relationship between said second digitized image and said first and second tile images, said data processor means compressing said first tile image into a first compressed tile image and compressing said second tile image into a second compressed tile image;

said data processor generating a preview image from said second digitized image;

said data processor means forming a second image file having a format interchangeable with said format of said first image file including a second header representing said second datum, said preview image, said map data, said first compressed tile image and said second compressed tile image; and

storage means coupled to said data processor means, for storing said first and second image files.

A data processing system for printing images of documents having at least two different sizes and interchangeable image objects, comprising:

a storage means for storing first and second image files;

said first image file having a format including a first header representing a first document size datum and a first compressed document image file corresponding to a first digitized document image;

said second image file having a format interchangeable with said format of said first image file including a second header representing a second document size datum, a first compressed tile image corresponding to a first digitized tile image and a second compressed tile image corresponding to a second digitized tile image, map data identifying a positional relationship between a second digitized document image and said first and second digitized tile images and a preview image derived from said second digitized document image;

a data processor means coupled to said storage means, for receiving said first and said second image files to prepare them for printing; and

a printer means coupled to said data processor means, for printing said first and said second image files;

said data processor means receiving said first image file, extracting said first datum from said first header and in response to said first datum, decompressing said first compressed image generating said first digitized image, said data processor means outputting said first digitized image to said printer means;

said data processor means receiving said second image file, extracting said second datum from said second header and in response to said second datum, outputting said preview image to an image output means coupled to said data processor means, decompressing said first compressed tile image generating said first tile image and decompressing said second compressed tile image generating said second tile image, said data processor means extracting said map data from said second image file and generating said second digitized image by arranging said first tile image and said second tile image in said positional relationship therewith in response to said map data, said data processor means outputting said second digitized image to said printer means.

A data processing system for displaying images of documents having at least two different sizes and interchangeable image objects, comprising:

a storage means for storing first and second image files;

said first image file having a format including a first header representing a first document size datum and a first compressed document image file corresponding to a first digitized document image;

said second image file having a format interchangeable with said format of said first image file including a second header representing a second document size datum, a first compressed tile image corresponding to a first digitized tile image and a second compressed tile image corresponding to a second digitized tile image, map data identifying a positional relationship between a second digitized document image and said first and second digitized tile images and a preview image derived from said second digitized document image;

a data processor means coupled to said storage means, for receiving said first and said second image files to prepare them for display; and

a display coupled to said data processor means, for displaying said first and said second image files;

said data processor means receiving said first image file, extracting said first datum from said first header and in response to said first datum, decompressing said first compressed image generating said first digitized image, said data processor means outputting said first digitized image to said display;

said data processor means receiving said second image file, extracting said second datum from said second header and in response to said second datum, outputting said preview image to an image output means coupled to said data processor means, decompressing said first compressed tile image generating said first tile image and decompressing said second compressed tile image generating said second tile image, said data processor means extracting said map data from said second image file and generating said second digitized image by arranging said first tile image and said second tile image in said positional relationship therewith in response to said map data, said data processor means outputting said second digitized image to said display.

In a data processing system, a method for manipulating images of documents having at least two different sizes and interchangeable image objects, comprising the steps of:

scanning with a document scanner means, documents of a first size and inputting a first size datum associated therewith;

scanning with with said document scanner means, documents of a second size larger than said first size and inputting a second size datum associated therewith;

generating a first digitized image of said first document and generating a second digitized image of said second document with said scanner means;

compressing with a processor means coupled to said scanner means, said first digitized image into a first compressed image in response to said first datum;

forming a first image file having a format with said processor means, including a first header representing said first datum and said first compressed image file;

generating a preview image from said second digitized image;

partitioning said second digitized image into first and second tile images with said processor means in response to said second datum;

generating map data identifying a positional relationship between said second digitized image and said first and second tile images with said processor means;

compressing said first tile image into a first compressed tile image and compressing said second tile image into a second compressed tile image with said processor means;

forming a second image file having a format interchangeable with said format of said first image file including a second header representing said second datum, said preview image, said map data, said first compressed tile image and said second compressed tile image with said processor means; and

storing said first and second image files in a storage means coupled to said processor means.

In a data processing system, a method for printing images of documents having at least two different sizes and interchangeable image objects, comprising the steps of:

accessing with a processor means, a first image file having a format including a first header representing a first document size datum and a first compressed document image file corresponding to a first digitized document image;

accessing with said processor means, a second image file having a format interchangeable with said format of said first image file, including a second header representing a second document size datum, a first compressed tile image corresponding to a first digitized tile image and a second compressed tile image corresponding to a second digitized tile image, map data identifying a positional relationship between a second digitized document image and said first and second digitized tile images, and a preview image derived from said second digitized document image;

extracting said first datum from said first header with said processor means and in response to said first datum, decompressing said first compressed document image generating said first digitized document image;

outputting said first digitized document image to a printer means;

extracting said second datum from said second header with said processor means and in response to said second datum, outputting said preview image to an image output means;

decompressing said first compressed tile image generating said first digitized tile image and decompressing said second compressed tile image generating said second digitized tile image;

extracting said map data from said second image file with said processor means and generating said second digitized document image by arranging said first digitized tile image and said second digitized tile image in said positional relationship in response to said map data; and

outputting said second digitized document image to said printer means.

In a data processing system, a method for displaying images of documents having at least two different sizes and interchangeable image objects, comprising the steps of:

accessing with a processor means, a first image file having a format including a first header representing a first document size datum and a first compressed document image file corresponding to a first digitized document image;

accessing with said processor means, a second image file having a format interchangeable with said format of said first image file, including a second header representing a second document size datum, a first compressed tile image corresponding to a first digitized tile image and a second compressed tile image corresponding to a second digitized tile image, map data identifying a positional relationship between a second digitized document image and said first and second digitized tile images, and a preview image derived from said second digitized document image;

extracting said first datum from said first header with said processor means and in response to said first datum, decompressing said first compressed document image generating said first digitized document image;

outputting said first digitized document image to a display;

extracting said second datum from said second header with said processor means and in response to said second datum, outputting said preview image to said display;

decompressing said first compressed tile image generating said first digitized tile image and decompressing said second compressed tile image generating said second digitized tile image;

extracting said map data from said second image file with said processor means and generating said second digitized document image by arranging said first digitized tile image and said second digitized tile image in said positional relationship in response to said map data; and

outputting said second digitized document image to said display.

## Claims

1. A data processing system for manipulating images of documents having at least two different sizes and interchangeable image objects, comprising:

   a document scanner means having a size data input means, for scanning in documents of a first size associated with a first size datum and scanning in documents of a second size larger than said first size associated with a second size datum, said scanner means generating a first digitized image of said first document and generating a second digitized image of said second document;

   a data processor means coupled to said scanner means, for receiving said first digitized image and in response to said first datum associated therewith, compressing said first digitized image into a first compressed image, said data processor means forming a first image file having a format including a first header representing said first datum and said first compressed image file;

   said data processor means receiving said second digitized image and in response to said second datum associated therewith, partitioning said second digitized image into first and second tile images, said data processor means generating map data identifying a positional relationship between said second digitized image and said first and second tile images, said data processor means compressing said first tile image into a first compressed tile image and compressing said second tile image into a second compressed tile image, said data processor means forming a second image file having a format interchangeable with said format of said first image file including a second header representing said second datum, said map data, said first compressed tile image and said second compressed tile image; and

   storage means coupled to said data processor means, for storing said first and second image files.

2. The data processing system of claim 1, wherein said first and second image files are in Mixed Object Document Content Architecture format.

3. The data processing system of claim 2, wherein said data processor generates a preview image from said second digitized image and includes said preview image in said second image file.

4. The data processing system of claim 2 or 3, wherein said compression of said first tile image is selectively omitted by said data processor means when said first tile image is blank, said second image file further including information describing a state of compression for said first tile and said second tile.

5. The data processing system of one of claims 2 to 4, wherein said map data in said second image file includes a number of tiles in the horizontal direction and a number of tiles in the vertical direction forming a rectangular arrangement for said second digitized document image, said map data further including information on a pattern for ordering said tiles in said rectangular arrangement.

6. In a data processing system, a method for manipulating images of documents having at least two different sizes and interchangeable image objects, comprising the steps of:

scanning with a document scanner means, documents of a first size and inputting a first size datum associated therewith;

scanning with with said document scanner means, documents of a second size larger than said first size and inputting a second size datum associated therewith;

generating a first digitized image of said first document and generating a second digitized image of said second document with said scanner means;

compressing with a processor means coupled to said scanner means, said first digitized image into a first compressed image in response to said first datum;

forming a first image file having a format with said processor means, including a first header representing said first datum and said first compressed image file;

partitioning said second digitized image into first and second tile images with said processor means in response to said second datum;

generating map data identifying a positional relationship between said second digitized image and said first and second tile images with said processor means;

compressing said first tile image into a first compressed tile image and compressing said second tile image into a second compressed tile image with said processor means;

forming a second image file having a format interchangeable with said format of said first image file including a second header representing said second datum, said map data, said first compressed tile image and said second compressed tile image with said processor means; and

storing said first and second image files in a storage means coupled to said processor means.

7. The data processing method of claim 6, wherein said first and second image files are in Mixed Object Document Content Architecture format.

8. The data processing method of claim 7, wherein said first size documents are pages smaller than C size and said second size documents are pages larger than B size.

9. The data processing method of claim 7 or 8, wherein said compression of said first tile image is selectively omitted when said first tile image is blank, said second image file further including information describing a state of compression for said first tile and said second tile.

10. The data processing method of one of claims 7 to 9, wherein said map data in said second image file includes a number of tiles in the horizontal direction and a number of tiles in the vertical direction forming a rectangular arrangement for said second digitized document image, said map data further including information on a pattern for ordering said tiles in said rectangular arrangement.

*FIG. 1*

*FIG. 2*

INITIALIZE SCANNER WORKSTATION 26

100

102 — SCAN IN DOCUMENT & RELATE TO INDEX

104 — GENERATE RASTER IMAGE OF DOCUMENT

106 — RECEIVE SIZE DATA FOR DOCUMENT

YES ← A OR B SIZE ? ⌐ 108

↓ NO

110 — IF C TO E SIZE, SCALE DOC. IMAGE FOR VIEW/EDIT

111 — PARTITION IMAGE INTO TILES

112 — GENERATE MAP RELATING TILES & DOCUMENT IMAGE

114 — SCALE DOCUMENT IMAGE TO GENERATE PREVIEW IMAGE

116 — COMPRESS TILES / CCITT GROUP 4

118 — INSERT MAP & COMPRESSED TILES IN IOCA FS 00 SEGMENT

119 — WRAP SIZE, PREVIEW IMAGE & IOCA IN MO:DCA-X ENVELOPE

IF A OR B SIZE ⌐ 120

SCALE DOCUMENT IMAGE FOR VIEW/EDIT ⌐ 122

COMPRESS DOCUMENT IMAGE / CCITT GROUP 4 ⌐ 124

INSERT COMPRESSED IMAGE IN IOCA FS 10 SEGMENT ⌐ 126

WRAP SIZE & IOCA SEGMENT IN MO:DCA-P ENVELOPE ⌐ 127

128 — TRANSMIT MO:DCA OBJECT TO HOST

130 — CORRELATE INDEX DATA WITH HOST

132 — DELETE OBJECT/INDEX AFTER TRANSMISSION

*FIG. 3*

INITIALIZE VIEWING WORKSTATION 42

140

142 — SELECT MO:DCA OBJECT FROM HOST TO VIEW AT WORKSTATION

144 — TRANSMIT OBJECT TO WS & STRIP MO:DCA HEADER

146 — EXTRACT SIZE DATA FROM MO:DCA OBJECT

YES ← A OR B SIZE ? — 148

↓ NO

150 — IF C TO E SIZE

151 — EXTRACT & DISPLAY PREVIEW IMAGE

152 — EXTRACT MAP RELATING TILES & DOCUMENT IMAGE

154 — DECOMPRESS IMAGES OF TILES

156 — ASSEMBLE DOCUMENT IMAGE FROM TILE IMAGES USING MAP

158 — SCALE DOCUMENT IMAGE FOR VIEWING

IF A OR B SIZE — 160

DECOMPRESS DOCUMENT IMAGE — 162

SCALE DOCUMENT IMAGE FOR VIEWING — 164

166 — MANIPULATE DOCUMENT IMAGE AS NEEDED BY USER

168 — RECOMPRESS IF NOT DELETED

170 — DELETE OBJECT WITH USER CONTROL OR TIME OUT

*FIG. 4*

INITIALIZE A TO E SIZE PRINTER WORKSTATION 32    180

182 — SELECT MO:DCA OBJECT FROM HOST TO PRINT AT WORKSTATION

184 — TRANSMIT OBJECT TO WS & STRIP MO:DCA HEADER

186 — EXTRACT SIZE DATA FROM MO:DCA OBJECT

YES    A OR B SIZE ?    — 188

NO

190 — IF C TO E SIZE

191 — EXTRACT & DISPLAY PREVIEW IMAGE

192 — EXTRACT MAP RELATING TILES & DOCUMENT IMAGE

194 — DECOMPRESS IMAGES OF TILES

196 — ASSEMBLE DOCUMENT IMAGE FROM TILE IMAGES USING MAP

IF A OR B SIZE    — 200

DECOMPRESS DOCUMENT IMAGE    — 202

206 — DISPLAY DOCUMENT ID ON PRINT QUEUE DISPLAY

208 — SEND RASTER OBJECT TO PRINTER

210 — DELETE OBJECT FROM WS AFTER PRINT ACKNOWLEDGE

*FIG. 5*

22

A-SIZE DRAWING 70

75

70'

COMPRESS
CCITTG4

## FIG. 6A

IOCA FS 10

IMAGE
FILE
48

MO:DCA-P

MO:DCA-P

| MO:DCA HEADER | A-SIZE DATUM | IOCA HEADER | COMPRESSED IMAGE | END IOCA | END MO:DCA |
|---|---|---|---|---|---|
| 220' | 222' | 223' | 70' | 227 | 221 |

## FIG. 6B

C1,2

85'

C1,2'

COMPRESS
CCITTG4

## FIG. 7B

MAP DATA 224

```
HORIZONTAL TILES = 7
VERTICAL TILES = 9
TILE ORDER = ROW 1:"C1,1; C1,2; . . . C1,7"
             ROW 2:"C2,1; C2,2; . . . C2,7"
                        .
                        .
                        .
             ROW 9:"C9,1; C9,2; . . . C9,7"
OTHER DATA
```

## FIG. 7C

**FIG. 7A**

EP 0 509 333 A2

TILE TYPE DATA   226 ⟍

| TITLE ID | ENCODED | COMPRESSION ALGORITHM |
|----------|---------|------------------------|
| C1,1 | NULL | - |
| C1,2 | YES | CCITTG4 |
| C1,3 | YES | CCITTG4 |
| C1,4 | YES | CCITTG4 |
| C1,5 | YES | CCITTG4 |
| C1,6 | YES | CCITTG4 |
| C1,7 | NULL | - |
| C2,1 | NULL | - |
| C2,2 | NULL | - |
| C2,3 | YES | CCITTG4 |
| C2,4 | YES | CCITTG4 |
| C2,5 | YES | CCITTG4 |
| C2,6 | NULL | - |
| C2,7 | NULL | - |
| ⋮ | ⋮ | ⋮ |
| C6,5 | YES | ALPHANUMERIC |
| ⋮ | ⋮ | ⋮ |
| C9,7 | NULL | - |
| OTHER DATA | | |

*FIG. 7D*

IMAGE FILE 54

IOCA FS 00

MO:DCA-X

MO:DCA-X

| MO:DCA HEADER | C-SIZE DATUM | PREVIEW IMAGE | IOCA HEADER | C1,2' | C2,3' | .... | C6,5' | MAP DATA | TYPE DATA | END IOCA | END MO:DCA |
|---|---|---|---|---|---|---|---|---|---|---|---|

220   222   225   223        230   224   226   227   221

*FIG. 7E*

MO:DCA -P IMAGE FILE 48

| BEGIN IMAGE | BEGIN OBJECT ENV'MT GROUP | OBJECT AREA DESCR | OBJECT AREA POS'N | MAP IMAGE OBJECT | IMAGE DATA DESCR | END OBJECT ENV'MT GROUP | IMAGE PICT'R DATA | IOCA FS 10 IMAGE SEG. (IMAGE DATA) 95 | END IMAGE |
|---|---|---|---|---|---|---|---|---|---|

220'

SIZE DATUM 222'

COMPRESSED IMAGE 70'

221

*FIG. 8A*

MO:DCA -X IMAGE FILE 54

| BEGIN IMAGE | BEGIN OBJECT ENV'MT GROUP | OBJECT AREA DESCR | OBJECT AREA POS'N | . . . | END OBJECT ENV'MT GROUP | IMAGE PICT'R DATA | NOOP --- PREVIEW IMAGE | IOCA FS 00 IMAGE SEG. (IMAGE DATA) 97 | END IMAGE |
|---|---|---|---|---|---|---|---|---|---|

225

220' →

SIZE DATUM 222

COMPRESSED TILE IMAGES 230 →

221

**FIG. 8B**

IOCA FS 10 IMAGE SEGMENT 95

| BEGIN SEG-MENT | BEGIN IMAGE CON-TENT | IMAGE SIZE | IMAGE ENCODING | LOOKUP TABLE ID | IMAGE DATA | . . . . . | IMAGE DATA | END IMAGE CONTENT | END SEG-MENT |
|---|---|---|---|---|---|---|---|---|---|

223' →

COMPRESSED IMAGE 70' —

227

**FIG. 8C**

IOCA FS 00 IMAGE SEGMENT 97

| BEGIN SEG-MENT | BEGIN IMAGE CON-TENT | IMAGE SIZE | IMAGE ENCODING | LOOKUP TABLE ID | IMAGE DATA | . . . . . | MAP & TYPE DATA | END IMAGE CONTENT | END SEG-MENT |
|---|---|---|---|---|---|---|---|---|---|

223 →

COMPRESSED TILE IMAGES 230 —

224 & 226

227

**FIG. 8D**

EP 0 509 333 A2

SCANNER WORKSTATION 26

MEMORY 300

**INPUT IMAGE BUFFER 302**

80

**IMAGE FILE PARTITION 304**

54

| H-MO:DCA | C | PREVIEW | H-IOCA | C1,2' | C1,3' | | C6,5' | MAP | EI | EM |

**SCANNER WORKSTATION PROGRAM 100**
(FIG. 3)

**OPERATING SYSTEM 306**

BUS 308

| CPU 310 | DASD 312 | DISPLAY ADAPTER 314 | KEYBOARD ADAPTER 316 | LAN INTRF 318 | SCANNER ADAPTER 320 |

TO 25

FROM 24

*FIG. 9*

VIEWING WORKSTATION 42

MEMORY 330

IMAGE FILE PARTITION 332                    54

| H-MO:DCA | C | PREVIEW | H-IOCA | C1,2' | C1,3' | | C6,5' | MAP | EI | EM |

IMAGE DISPLAY BUFFER 334                    80

VIEWING WORKSTATION PROGRAM 140
(FIG. 4)

OPERATING SYSTEM 336

BUS 338

| CPU 340 | DASD 342 | DISPLAY ADAPTER 344 | KEYBOARD ADAPTER 346 | LAN INTRF 348 |

TO 40

FROM 25

*FIG. 10*

29

A TO E SIZE PRINTER WORKSTATION 32

MEMORY 360

IMAGE FILE PARTITION 362                                    54

| H-MO:DCA | C | PREVIEW | H-IOCA | C1,2' | C1,3' | | C6,5' | MAP | EI | EM |

IMAGE ASSEMBLY BUFFER 364                    80

A TO E SIZE PRINTER WORKSTATION PROGRAM 180
(FIG. 5)

OPERATING SYSTEM 366

BUS 368

| CPU 370 | DASD 372 | DISPLAY ADAPTER 374 | KEYBOARD ADAPTER 376 | LAN INTRF 378 | PRINTER ADAPTER 380 |

TO 35    FROM 25    TO 34

*FIG. 11*

30

A & B SIZE PRINTER WORKSTATION 28

MEMORY 460

IMAGE FILE PARTITION 462    48

| H-MO:DCA | A | H-IOCA | A1' | EI | EM |

IMAGE BUFFER 464

70

75

A & B SIZE PRINTER WORKSTATION PROGRAM 500
(FIG.14)

OPERATING SYSTEM 466

BUS 468

| CPU 470 | DASD 472 | DISPLAY ADAPTER 474 | KEYBOARD ADAPTER 476 | LAN INTRF 478 | PRINTER ADAPTER 480 |

FROM 25

TO 30

*FIG. 12*

MEMORY 460

IMAGE FILE PARTITION 462          54

| H-MO:DCA | C | PREVIEW | H-IOCA | C1,2' | C1,3' | | C6,5' | MAP | El | EM |

IMAGE BUFFER 464

80' SCALE REDUCED
TO B-SIZE

A & B SIZE PRINTER WORKSTATION PROGRAM 500
(FIG. 14)

OPERATING SYSTEM 466

## FIG. 13

INITIALIZE A & B SIZE PRINTER WORKSTATION 28    500

502 — SELECT MO:DCA OBJECT FROM HOST TO PRINT AT WORKSTATION

504 — TRANSMIT OBJECT TO WS & STRIP MO:DCA HEADER

506 — EXTRACT SIZE DATA FROM MO:DCA OBJECT

YES    A OR B SIZE ?    — 508

NO

590 — IF C TO E SIZE

591 — EXTRACT & DISPLAY PREVIEW IMAGE

592 — EXTRACT MAP RELATING TILES & DOCUMENT IMAGE

594 — DECOMPRESS IMAGES OF TILES

596 — ASSEMBLE DOCUMENT IMAGE FROM TILE IMAGES USING MAP

598 — RESCALE DOCUMENT IMAGE TO B-SIZE FOR PRINTING

595

IF A TO B SIZE    — 515

DECOMPRESS DOCUMENT IMAGE    — 516

520 — DISPLAY DOCUMENT ID ON PRINT QUEUE DISPLAY

522 — SEND RASTER OBJECT TO PRINTER

524 — DELETE OBJECT FROM WS AFTER PRINT ACKNOWLEDGE

*FIG. 14*